# EUROPEAN PATENT APPLICATION

(11) **EP 4 667 962 A1**
(43) Date of publication of application: **24.12.2025**
(21) Application number: 24183841.6
(22) Date of filing: 21.06.2024
(51) Int. Cl.: G01S 7/02, G01S 7/03, G01S 7/35, G01S 13/00, G01S 13/931, H01Q 1/32

(54) **SYNCHRONIZING OF DISTRIBUTED RADAR UNITS**

(71) Applicant: NXP B.V., 5656 AG Eindhoven (NL)
(72) Inventor: ALHASSON, Saif, 82819 Munich (DE); BEKOOIJ, Marco Jan Gerrit, 5656 AE Eindhoven (NL); KOPPELAAR, Arie Geert Cornelis, 5656 AE Eindhov (NL); LOK, Pieter, 6534 AE Nijmegen (NL)
(74) Representative: Hardingham, Christopher Mark

(57) **Abstract**

A radar system (100) for a vehicle. The radar system comprises the following. A first radar unit comprising: a first transmitter head (105-1) and a first receiver head (105-3); a first coupling structure (110-1) coupled to the first transmitter head or the first receiver head; and a first waveguide launcher (120-1) coupled to the first coupling structure. The radar system further comprising a second radar unit comprising: a second transmitter head and a second receiver head (105-2); a second coupling structure (110-2) coupled to the second receiver head; and a second waveguide launcher (120-2) coupled to the second coupling structure. The radar system further comprising a waveguide coupled (125) between the first and second waveguide launchers. The radar system configured to synchronize the radar units. The first and second waveguide launchers comprising circular polarizing waveguide launchers.

## Description

### FIELD

The present disclosure relates to a radar system and method for synchronizing distributed radar units. In particular, the present disclosure relates to a fully integrated, easy mountable waveguide for wavelengths in the millimetre (mm) spectrum, and a radar system for synchronising distributed radar units.

### BACKGROUND

Radar sensors can be found in a variety of sensing applications in which distances and velocities of objects are to be measured and/or analysed. One of these applications is the automotive sector, for example as used in parking sensors. Autonomous cars, for example, use numerous sensors such as radar sensors to detect and locate various objects in their surroundings. Information about position and velocity of objects in the surrounding of an autonomous car is used to navigate safely, based on information received via these sensors.

Modern radar systems make use of highly integrated radio frequency (RF) circuits, which may incorporate all core functions of a radar transceiver in one single package (single chip transceiver). These usually include a local RF oscillator (LO), power amplifiers (PA), and low noise amplifiers (LNA) mixers.

Frequency modulated continuous wave (FMCW) radar systems use radar signals whose frequency is modulated by ramping the signal frequency up and down. Such radar signals are often referred to as "chirp signals" or simply as chirps. A radar sensor usually radiates sequence of chirps using one or more antennas, and the radiated signal is backscattered by one or more objects (referred to as radar targets) located in the "field of view" of a radar sensor. The backscattered signals are received and processed by the radar sensor. The detection of the radar targets is usually accomplished using digital signal processing.

In an automotive radar system, one or more radar sensors may be used to detect obstacles around the vehicle and the speeds of the detected objects relative to the vehicle. A processing unit in the radar system may determine the appropriate action needed, e.g., to avoid a collision or to reduce collateral damage, based on signals generated by the radar sensors or may alert the vehicle driver about potential danger or assist the driver with parking the vehicle.

Monostatic radars are composed of a single set of transmitter, receiver, and antenna. Bistatic radars, on the other hand, is a radar system comprising a transmitter head and a receiver head at the same frequency band that can be separated due to the transmitter and receiver heads not using the same frequency.

In a distributed coherent bistatic radar both radar heads use their own local crystal XO to generate a 76 GHz RF signal. An XO is an active device containing a crystal resonator, which generates a sinusoidal signal. The local XOs are not exactly the same and will generate a slightly different frequency. This frequency is also not constant but slowly varying which is known as phase-noise.

Synchronizing the radar heads in the system can be challenging. One way of determining synchronization is by determining the frequency offset and phase-noise, which can be estimated using the beat signals of both radar heads that is a result of reflection against physical objects in the radar scene. This can cause problems. For example, frequency offset and phase-noise may be incorrectly estimated by the radar which can results in that targets are not detected.

### SUMMARY

Features of the invention are set out in the appended claims.

According to a first aspect, there is provided a radar system for a vehicle. The radar system comprises the following. A first radar unit comprising: a first transmitter head and a first receiver head; a first coupling structure coupled to the first transmitter head or the first receiver head; and a first circular polarizing waveguide launcher coupled to the first coupling structure. The radar system further comprising a second radar unit comprising: a second transmitter head and a second receiver head; a second coupling structure coupled to the second receiver head; and a second circular polarizing waveguide launcher coupled to the second coupling structure. The radar system further comprising a waveguide coupled between the first and second circular polarizing waveguide launchers. The first and second coupling structures are configured to redirect a portion of a signal from the respective transmitter head or receiver head that the coupling structure is coupled to in order to excite the first and second circular polarizing waveguide launchers respectively in order to transmit an excited signal to the other of the radar units via the waveguide. Upon receipt of the circularly polarized excited signal received via the waveguide, a beat signal is generated from which a frequency offset and a phase-noise calculation are made. The first and second radar units are configured to be synchronized based on the frequency offset and the phase-noise calculation.

In some embodiments, the first coupling structure may be coupled to the transmitter head of the first radar unit; and the first and second circular polarizing waveguide launchers may comprise a single feed from the respective coupling structures.

In some embodiments, the first coupling structure may be coupled to the receiver head of the second radar unit; and the first and second waveguide circular polarizing launchers may comprise a single feed from the respective coupling structures.

In some embodiments, the first radar unit may further comprise a third coupling structure coupled to the other of the first receiver head or the first transmitter head of the first radar unit. The second radar unit may further comprise a fourth coupling structure coupled to the transmitter head of the second radar unit. The first waveguide launcher may be coupled to the first and third coupling structure. The second waveguide launcher may be coupled to the second and fourth coupling structures.

In some embodiments, the first radar unit may further comprise a first power combiner configured to combine signals from the first and third coupling structures; and the second radar unit may further comprise a second power combiner configured to combine signals from the second and fourth coupling structures. The power combiners can be used to create a single feed to the first waveguide launcher form the two radar heads of the radar units.

In some embodiments, the circular polarizing waveguide launchers may comprise a single port.

In some embodiments, the circular polarizing waveguide launchers may have a square profile with two trimmed opposing corners.

In some embodiments, the radar system may further comprise a first phase shifter coupled to the first and third coupling structures and the first circular polarizing waveguide launcher; and a second phase shifter coupled to the second and fourth coupling structures and the second circular polarizing waveguide launcher. The first and second phase shifters may each comprise a dual input dual output phase shifter. This may help to generate a clockwise and an anticlockwise rotated field in the waveguide.

Optionally, wherein the wherein dual output signals have a 90 degree phase shift relative to one another i.e. the phase shifters output signals have a 90 degree phase shift. Accordingly, the circular polarizing waveguide launchers receive a delayed feeding signal in a horizontal input point signal by 90 degrees compared to a vertical point.

In some embodiments, the first and second circular polarizing waveguide launchers may each excite a clockwise and an anti-clockwise rotated field in the waveguide.

In some embodiments, the first radar unit may further comprise: a first power combiner configured to combine signals from the first and third coupling structures; a first data transceiver; and the first phase shifter coupled to the first power combiner and the first data transceiver. The second radar unit may further comprise: a second power combiner configured to combine signals from the second and fourth coupling structures; a second data transceiver; and the second phase shifter coupled to the second power combiner and the second data transceiver. The first and third coupling structures create a first feed to the waveguide launcher whilst the first and second data transceivers create a second feed to the waveguide launcher thereby resulting in a dual feed.

In some embodiments, the coupling structures may each comprise a directional coupler.

In some embodiments, the coupling structures may each comprise a power divider.

In some embodiments, the first and second waveguide launchers may comprise two orthogonal ports. This may help to create a dual polarization of the wave transmitted through the waveguide.

In some embodiments, the waveguide may be configured to connect to one or more further radar units. The radar units each comprising a transmitter head and a receiver head.

In some embodiments, the redirected portion of energy/power of the respective radar head may comprise less than 10% of the total energy/power of the radar head.

There is also provided herewith a bumper comprising the radar system, the bumper comprising the following. A first radar unit comprising: a first transmitter head and a first receiver head; a first coupling structure coupled to the first transmitter head or the first receiver head; and a first waveguide launcher coupled to the first coupling structure. The radar system further comprising a second radar unit comprising: a second transmitter head and a second receiver head; a second coupling structure coupled to the second receiver head; and a second waveguide launcher coupled to the second coupling structure. The radar system further comprising a waveguide coupled between the first and second waveguide launchers. The first and second coupling structures are configured to redirect a portion of a signal from the respective transmitter head or receiver head that the coupling structure is coupled to in order to excite the first and second waveguide launchers respectively in order to transmit an excited signal to the other of the radar units via the waveguide. Upon receipt of the excited signal received via the waveguide, a beat signal is generated from which a frequency offset and a phase-noise calculation are made. The first and second radar units are configured to be synchronized based on the frequency offset and the phase-noise calculation. The first and second waveguide launchers comprising circular polarizing waveguide launchers.

Optionally, wherein the bumper is fabricated on top of or integral to the bumper.

There is also provided herewith a vehicle comprising the radar system comprising the bumper or the radar system, the vehicle comprising the following. A first radar unit comprising: a first transmitter head and a first receiver head; a first coupling structure coupled to the first transmitter head or the first receiver head; and a first waveguide launcher coupled to the first coupling structure. The radar system further comprising a second radar unit comprising: a second transmitter head and a second receiver head; a second coupling structure coupled to the second receiver head; and a second waveguide launcher coupled to the second coupling structure. The radar system further comprising a waveguide coupled between the first and second waveguide launchers. The first and second coupling structures are configured to redirect a portion of a signal from the respective transmitter head or receiver head that the coupling structure is coupled to in order to excite the first and second waveguide launchers respectively in order to transmit an excited signal to the other of the radar units via the waveguide. Upon receipt of the excited signal received via the waveguide, a beat signal is generated from which a frequency offset and a phase-noise calculation are made. The first and second radar units are configured to be synchronized based on the frequency offset and the phase-noise calculation. The first and second waveguide launchers comprising circular polarizing waveguide launchers.

According to a second aspect, there may be provided a method of synchronising a radar system for a vehicle, the method comprising: feeding a first waveguide launcher with a first signal from a first radar unit comprising a transceiver head or a receiver head, wherein the first signal from the first radar unit is coupled to the first waveguide launcher via a first coupling structure; the first waveguide launcher launching a polarized wave in a waveguide; exciting a second waveguide launcher coupled to the waveguide; at the second waveguide launcher, transforming the first signal into a second signal coupled to a receiving channel of a second radar unit by a second coupling structure at the second radar unit; determining a frequency offset and a phase-noise between the first and second radar units based on a resulting beat signal generated by the first and second signals; and synchronising local oscillators of the first and second radar units based on the determined frequency offset and phase-noise.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures.
Figure 1 illustrates a diagram of a radar system according to a first embodiment of the present disclosure;
Figure 2 illustrates a diagram of a radar system according to a second embodiment of the present disclosure comprising a dual Tx-Rx-Rx channel;
Figure 3 illustrates a diagram of a radar system according to a third embodiment of the present disclosure comprising a dual Tx-Rx channel;
Figure 4 illustrates a diagram of a radar system according to a fourth embodiment of the present disclosure comprising a dual Tx-Rx channel using a coupler and a dual feed phase shifter;
Figure 5 illustrates a diagram of a radar system according to a fifth embodiment of the present disclosure comprising a dual Tx-Rx channel using power dividers and a dual feed phase shifter;
Figure 6 illustrates a diagram of a radar system according to a sixth embodiment of the present disclosure comprising a Tx-Rx and data channel;
Figure 7 illustrates a diagram of a coupler used in some of the embodiments of the present disclosure;
Figure 8 illustrates a power combiner used in some of the embodiments of the present disclosure;
Figures 9A and 9B illustrate alternative waveguide launcher configurations according to embodiments of the present disclosure;
Figure 10 illustrates a phase shifter according to embodiments of the present disclosure;
Figure 11 illustrates a schematic diagram of a vehicle bumper comprising radar units;
Figure 12 illustrates a vehicle comprising a radar system according to an embodiment of the present disclosure.

### DETAILED DESCRIPTION

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description.

The present disclosure provides a device and method for an alternative way to calculate frequency offset and phase-noise between distributed radar units to synchronize the radar units within a system. The solution described herein does not rely on radar signals being reflected off physical objects, instead using portions of the radar signal being transmitted by the radar heads directly between the radar heads in the system to generate beat signals. Frequency offset and phase-noise can be estimated using the beat signals of both radar heads that is a result of reflection against physical objects in the radar scene. An alternative method is provided by the present disclosure; to use the directly received signal, i.e. without reflection against an object, instead making the calculation based on signals received from the Tx or Rx of the other radar head. Typical radar antenna direct most of their energy in the forward direction, and therefore have a low gain at 90 degree sidewards. The spill-over is therefore usually a weak signal that is unsuitable for synchronization.

In the present disclosure, the signal is coupled from one radar unit to the other as described in detail below. This signal can result in a strong beat signal in the radar heads of the system that can be used to estimate the frequency offset and phase-noise and compensate it as well. Only a very small portion of the energy of the radar heads is coupled to the waveguide, so the sacrifice to the overall operation of the radar units is small.

A reliable and strong signal can be created from this small portion of re-directed energy which can be used to estimate the frequency offset of the radars by coupling the signal from one radar unit to the other. The use of this coupled signal helps to create a reliable means for synchronization. An advantage of using the coupled signal in synchronization is that it creates a target that is not moving and has thus no velocity, which helps to simplify the calculations.

The dielectric waveguide launcher in the embodiments described below launches circular polarized signals into the waveguide which transmits the signals between the distributed radar units. This helps to make the radar system robust. Circular polarization provides many advantages, one of them is the flexibility in twisting the dielectric waveguide between the two launchers. Flexibility and robustness against the effects of twisting are of practical importance since radar units making up a distributed radar system can be in the range of meters apart from each other.

No dedicated Tx-Rx channel is required to perform synchronization of the radar heads in the system of the present disclosure since only a small portion of the energy is coupled to the waveguide. This provides a further advantage over prior art arrangements.

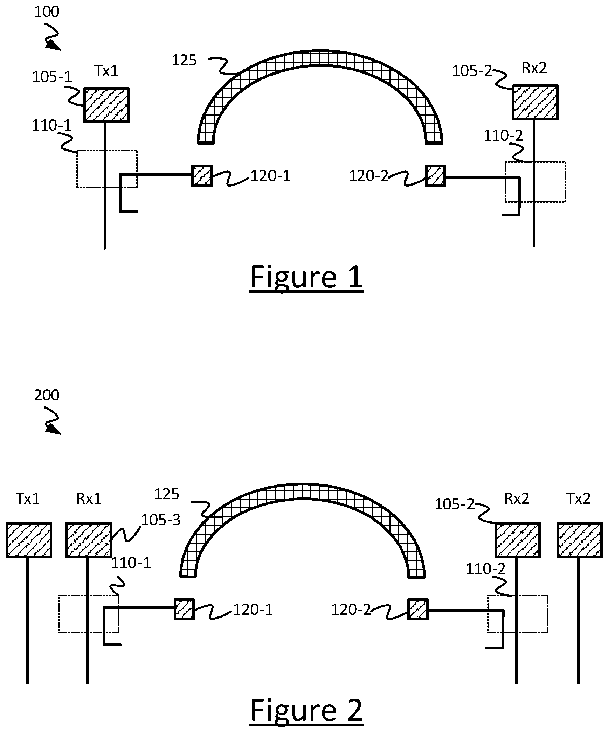

Figure 1 illustrates a diagram of a radar system 100 according to a first embodiment of the present disclosure. The radar system 100 comprises a first and second radar unit coupled by a waveguide 125. Although not illustrated, more radar units could be present in the radar system 100.

The first radar unit comprises a transmitter head (Tx1) 105-1 coupled via a first coupling structure 110-1 to a first waveguide launcher 120-1. In the illustrated example of Figure 1, the waveguide launcher 120-1 comprises a first circular polarized waveguide launcher having a single port for receiving a single feed from Tx1. Not illustrated in Figure 1 is a receiver head (Rx1) of the first radar unit because it is not coupled to the radar system described below for synchronization in this first embodiment.

The second radar unit comprises a receiver head (Rx2) 105-2 coupled via a second coupling structure 110-2 to a second polarized waveguide launcher 120-2. In the illustrated example of Figure 1, the waveguide launcher 120-2 comprises a second single waveguide launcher 120-2 comprising a second circular polarized waveguide launcher having a single port. Not illustrated in Figure 1 is a transmitter head (Tx2) of the second radar unit because it is not coupled to the radar system described below for synchronization.

The first and second radar units are coupled to one another via a waveguide 125 suitable for wavelengths in the millimetre range as used in the present disclosure. The waveguide 125 could be a dielectric waveguide 125. In other examples, the waveguide can be a rod (e.g. a plastic rod) or fibre. The cross-section of the waveguide 125 is circular. The waveguide launchers 120 launch circular polarized electromagnetic signals into the waveguide 125. Dielectric waveguides are flexible, easy mountable, cheap and have low loss transmission lines that can be used to connect two or more radar units for synchronizing the transceivers and hence can help to achieve fully coherent distributed radar functionality with a bigger antenna aperture and hence higher angular resolution. Antenna aperture is the size or span of all antenna elements used for the sensing in a system. For a distributed radar system the antenna elements span a large distance, namely the separation distance of the radar heads. Angular resolution scales with antenna aperture, the larger the better in terms of accuracy.

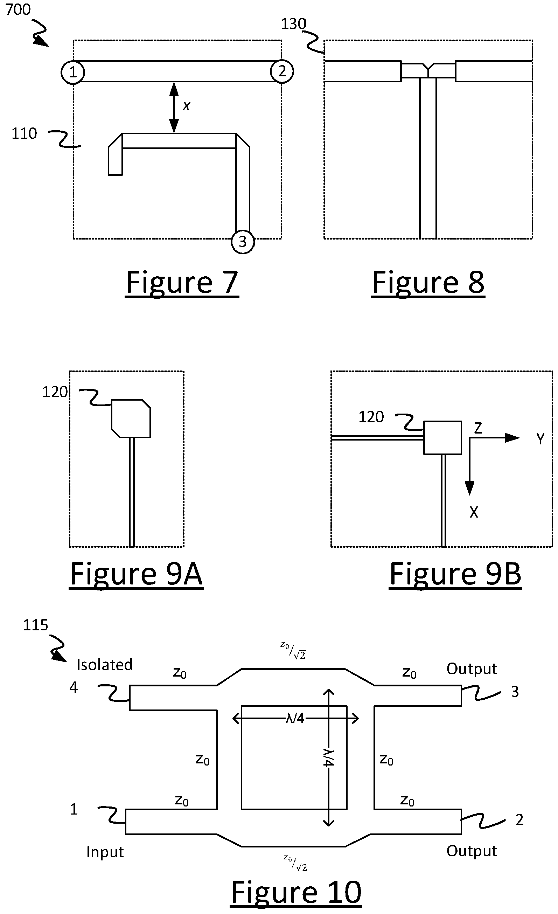

Transmitter (Tx) and receiver (Rx) antennas (also called Tx, Rx heads) are fed by feeding lines from an RF chip (not shown). The coupling structures 110 allow some energy or power to be re-directed from the Tx and Rx to the waveguide launchers 120-1, 120-2. The coupling structures 110-1, 110-2 of Figure 1 comprise directional couplers (described further below in relation to Figure 7). Although they are called directional couplers, the signal can in fact flow in two directions through the couplers. The purpose of using the couplers is attenuation such that only a very small amount of power is coupled from the Tx head into the waveguide 125, and at the receiving side that the signal received by the Rx head to the integrated transceiver circuit (IC) is not disturbed and is not attenuated.

Other coupling structures comprise power dividers, which achieve the same effect of re-directing some of the power of the antenna to the waveguide launchers 120-1, 120-2. The energy between the first and second radar units as re-directed by the coupling structures 120-1, 120-2 is used to synchronize both the first and second radar units enabling a distributed radar network with higher angular resolution as will be described in more detail below.

A dielectric waveguide (DWG) may be used as a medium to communicate chip-to-chip in a system. In electromagnetic and communications engineering, the term waveguide may refer to any linear structure that conveys electromagnetic waves between its endpoints. The waveguide 125 of the present disclosure is designed for wavelengths in the millimetre (mm) spectrum.

The dielectric waveguide can employ a solid dielectric core or could be formed of a coreless fibre (e.g. a small plastic tube). A dielectric is an electrical insulator that can be polarized by an applied electric field. When a dielectric is placed in an electric field, electric charges shift from their average equilibrium positions causing dielectric polarization. Because of dielectric polarization, positive charges are displaced toward the field and negative charges shift in the opposite direction. This creates an internal electric field which reduces the overall field within the dielectric itself. The term dielectric is used to indicate the energy storing capacity of the material by means of polarization.

In operation, a signal is created at Tx1 105-1 of the first radar unit, and at Rx 105-2 of the second radar unit. A portion of the power of these signals is diverted by the coupling structures 110-1, 110-2 and redirected as a single feed to the waveguide launchers 120-1, 120-2. The redirected portion of power of the respective radar head preferably comprises less than 10% of the total power of the radar head. More preferably wherein the redirected portion of power is less than 5%, even more preferably less than 1%.

The waveguide launchers 120 excite circular polarizations of the signal to the waveguide 125. Two signals comprising right-handed (clockwise) and left-handed (anti-clockwise) circular polarizations can be transmitted through the dielectric waveguide 125 in the same propagation direction using the same waveguide 125. Orthogonalization of the signals is also achieved such that more data can be transferred via the waveguide 125.

These excited signals are transmitted through the waveguide 125 to the other radar unit in the system that the waveguide 125 is coupled to. In each radar head (Tx1, Rx2 in Figure 1, though this may be different in other embodiments described below) the received signal from the other radar head is downmixed with the locally generated RF signal. In one example, a 76 GHz RF signal can be used, though any suitable frequency can be used. After downmixing a slightly different and time-variant beat frequency is obtained as a result of the use of a different crystal oscillator (XO) for transmission than reception and the phase-noise of each XO. To get a good detection and direction of arrival, DoA, estimation performance, the time varying frequency difference should be estimated and compensated.

The beat signal being generated in both radar heads 105-1, 105-2 of the radar system 100 can be used to estimate the frequency offset and phase-noise. A way to estimate the frequency offset and phase-noise from the beat signal of both radar heads is described in, e.g. *"*Gottinger M, Hoffmann M, Christmann M, Schütz M, Kirsch F, Gulden P, Vossiek M. Coherent automotive radar networks: The next generation of radar-based imaging and mapping. IEEE Journal of Microwaves. 2021 Jan 11;1(1):149-63*.".* The estimation procedure is described in this paper with equation 5 on page 153. This approach also works if multiple targets are present in the scene, and thus also when an additional coupled target is introduced.

The result of implementing the radar system 100 is a distributed radar network with high angular resolution where synchronization of the radar units in the system 100 is achieved.

Figure 2 illustrates a diagram of a radar system 200 according to a second embodiment of the present disclosure comprising a dual Tx-Rx-Rx channel. The radar system 200 comprises a first and second radar unit coupled by a waveguide 125.

The first radar unit comprises a transmitter head Rx1 105-3 coupled via a first coupling structure 110-1 to a first waveguide launcher 120-1 comprising a first circular polarized waveguide launcher having a single port for receiving a single feed from Rx1. A receiver head Rx1 of the first radar unit is also illustrated.

The second radar unit comprises a receiver head Rx2 105-2 coupled via a second coupling structure 110-2 to a second polarized waveguide launcher 120-2 comprising a second circular polarized waveguide launcher having a single port. A transmitter head Tx2 of the second radar unit is also illustrated.

The first and second radar units are coupled to one another via a waveguide 125 suitable for wavelengths in the millimetre range as used in the present disclosure and as described above in detail.

The second embodiment describes many of the same features as the first radar system 100 described above. The coupling structures 120-1, 120-2 comprising directional couplers, the waveguide launchers 120-2, 120-1, and the waveguide 125 are described above in relation to Figure 1 and will not be described again in detail. In the illustrated example in Figure 2, the coupling structures 120 are directional couplers.

The radar system 200 illustrates an alternative way to establish a two-way connection between first and second radar units. In this embodiment, wireless crosstalk between Tx1 and Rx1 of the first radar unit is channelled via the coupling structure 110-1, e.g. via a directional coupler as illustrated in Figure 2, coupled to Rx2. The waveguide launcher 120-1 is fed by this crosstalk signal, which is then sent to Rx2 via the waveguide 125 in the same manner as described above in relation to Figure 1. A crosstalk signal between Tx2 and Rx2 of the second radar unit is transmitted to Rx1 of the first radar unit in the same way.

The coupling structures 110-1, 110-2 comprising bi-directional couplers and the waveguide launchers 120-1, 120-2 are connected to the receiver heads Rx1, Rx2 only, instead of the transmitter heads Tx1, Tx2 in this embodiment. An advantage of this is that specific coupling structures to the Tx heads are not required, which increases the freedom of placement of the waveguide launchers 120 and feedlines in the design layout of the system.

The operation of the radar system 200 and method of synchronisation of the two radar units is achieved in the same manner as described above in relation to Figure 1.

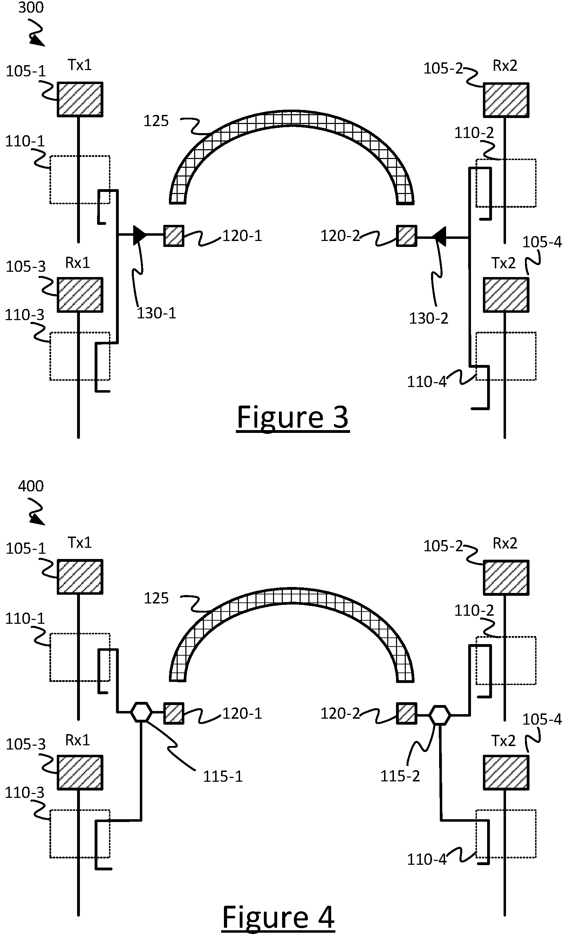

Figure 3 illustrates a diagram of a radar system 300 according to a third embodiment of the present disclosure comprising a dual Tx-Rx channel. The radar system 300 comprises a first and second radar unit coupled by a waveguide 125.

The first radar unit comprises a transmitter head Tx1 coupled via a first coupling structure 110-1 and a receiver head Rx1 105-3 coupled via a third coupling structure 110-3 to a first power combiner 130-1, the first power combiner coupled to a first waveguide launcher 120-1 comprising a first circular polarized waveguide launcher having a single port for receiving a single feed from the first power combiner 120-1.

The second radar unit comprises a receiver head Rx2 105-2 and a second coupling structure 110-2, a transmitter head Tx2 105-4 and a fourth coupling structure 110-4, wherein the coupling structures 110-2, 110-4 are coupled to a second power combiner 130-2. The second power combiner 130-2 is coupled to a second polarized waveguide launcher 120-2 comprising a second circular polarized waveguide launcher having a single port.

The first and second radar units are coupled to one another via a waveguide 125 suitable for wavelengths in the millimetre range as used in the present disclosure and as described above in detail.

The coupling structures comprising directional couplers, the single feed dual polarized waveguide launchers 120-2, 120-1, and the waveguide 125 are described above in relation to Figure 1.

The radar system 300 of Figure 3 comprises additional radar heads: Rx1 105-3 which is a receiver head of the first radar unit and Tx2 105-4 which is a transmitter head of the second radar unit. Rx1 105-3 is coupled to coupling structure 110-3 comprising a directional coupler and Tx2 105-4 is coupled to coupling structure 110-4 comprising a directional coupler.

The signal from the first radar unit comprising Tx1 105-1 and Rx1 105-3 is redirected by coupling structures 110-1, 110-3 respectively and combined by a first power combiner 130-1. The first power combiner 130-1 provides the combined signal from Tx1 105-1 and Rx1 105-3 as a single feed to the circular waveguide launcher 120-1. A circular waveguide launcher 120-1 having trimmed edges as shown in Figure 9A may be suitable for this embodiment for causing the desired circular polarization excitation of the signal into the dielectric waveguide 125.

The signal from the second radar unit comprising Tx2 105-4 and Rx1 105-2 is redirected by coupling structures 110-4, 110-2 respectively and combined by a second power combiner 130-2. The second power combiner 130-2 provides the combined signal from Tx2 105-4 and Rx2 105-2 as a single feed to the waveguide launcher 120-2.

The waveguide launchers 120-1, 120-2 launch a circular polarized signal into the waveguide 125 as described above in relation to Figure 1.

A synchronization signal generated by the radar system 300 can be sent in two directions between the radar units much like that of the first and second embodiments described above. Figure 3 shows that power from Tx1 is combined with power from Rx1 (a similar connection is made Tx2 and Rx2) by power combiner 130-1 (130-2) to feed the waveguide launcher 120-1 (120-2). This combining of the signal generates a Tx1-Rx2 signal path in one direction and Tx2-Rx1 in the opposite direction. By use of the power combiner 130-1 (130-2) an additional path is created between the Rx and Tx via the couplers 110. Due to the coupler's attenuation at both feedlines of the power combiner 130, the signal via this path can be made smaller than the parasitic coupling that is always present.

By using Tx-Rx power combiner 130, the synchronization signal can be sent in both directions between the first and second radar units using the same waveguide 125 as in the earlier embodiments.

Figure 4 illustrates a diagram of a radar system 400 according to a fourth embodiment of the present disclosure comprising a dual Tx-Rx channel using dual feed dual output phase shifters 115. The radar system 400 comprises a first and second radar unit coupled by a waveguide 125.

The first radar unit comprises a transmitter head Tx1 coupled via a first coupling structure 110-1 and a receiver head Rx1 105-3 coupled via a third coupling structure 110-3 to a first phase shifter 115-1, the first phase shifter 115-1coupled to a first waveguide launcher 120-1 comprising a first circular polarized waveguide launcher having dual ports for receiving a dual feed from the first phase shifter 115-1.

The second radar unit comprises a receiver head Rx2 105-2 and a second coupling structure 110-2, a transmitter head Tx2 105-4 and a fourth coupling structure 110-4, wherein the coupling structures 110-2, 110-4 are coupled to a second phase shifter 115-2. The second phase shifter 115-2 is coupled to a second polarized waveguide launcher 120-2 comprising a second circular polarized waveguide launcher having a dual ports for receiving a dual feed from the second phase shifter 115-2.

The first and second radar units are coupled to one another via a waveguide 125 suitable for wavelengths in the millimetre range as used in the present disclosure and as described above in detail.

The radar heads (Tx1, Rx1, Tx2, Rx2) feed into the waveguide launchers 120 and the waveguide 125 via phase shifters 115. No power combiner 130 is used in the radar system 500, instead, the signals from the radar heads 105 are fed into dual feed dual output phase shifters 115. Tx1 and Rx1 are connected to the first phase shifter 115-1. Rx2 and Tx2 are connected to the second phase shifter 115-2.

The dual output of the phase shifters 115 feeds into the dual feed circular polarized waveguide launchers 120. An input signal is received from each of the transmitter head Tx and receiver head Rx that the phase shifter 115 is connected to. The phase shifters 115 have dual output signals to the waveguide launchers 120. The output signals from the phase shifters 115 have different phase shifts to the input signals from the Tx and Rx channels. The phase shifts are caused by λ/4 delays (i.e. 90 degrees phase shift) to the signals. A phase shifter 115 that can be used in the distributed radar systems described herein is illustrated in Figure 10. A phase shift from a first port 1 to a second port 2 is different from a phase shift from the first port 1 to a third port 3. Effectively, the phase shifter 115 causes, for a signal input at the first port 1 (a first input port), a -90 degrees phase shift between the second port 2 (a first output port) and the third port 3 (a second output port), and for the signal inserted at a fourth port 4 (a second input port) a +90 degrees phase shift between the second port 2 and the third port 3. The circular polarizing waveguide launchers 120-1, 120-2 receive these dual output phase shifted signals from the phase shifters 115-1, 115-2 and excite a right handed circular polarization in one channel of the waveguide 125 and a left handed circular polarization in another channel of the waveguide 125.

The phase shifter 115-1 takes as input signals from Tx1 and Rx1 and outputs phase shifted signals to the first dual feed circular waveguide launcher 120-1 to generate a clockwise and an anti-clockwise rotated field in the waveguide 125. The phase shifter 115-2 takes as input signals from Tx2 and Rx2 and outputs signals to the second dual feed circular waveguide launcher 120-2 to generate a clockwise and an anti-clockwise rotated field in the waveguide 125.

This way of connecting the Tx and Rx to the different ports of the waveguide launcher 120 provides maximum isolation of both signal channels due to isolation of the directional couplers 110-1, 110-2, 110-3, 110-4 and the polarization orthogonality within the waveguide 125. Left handed and right handed polarizations can be isolated in the order of 20 dB or higher.

An example of a phase shifter 115 for this application is shown in Figure 10 and described below.

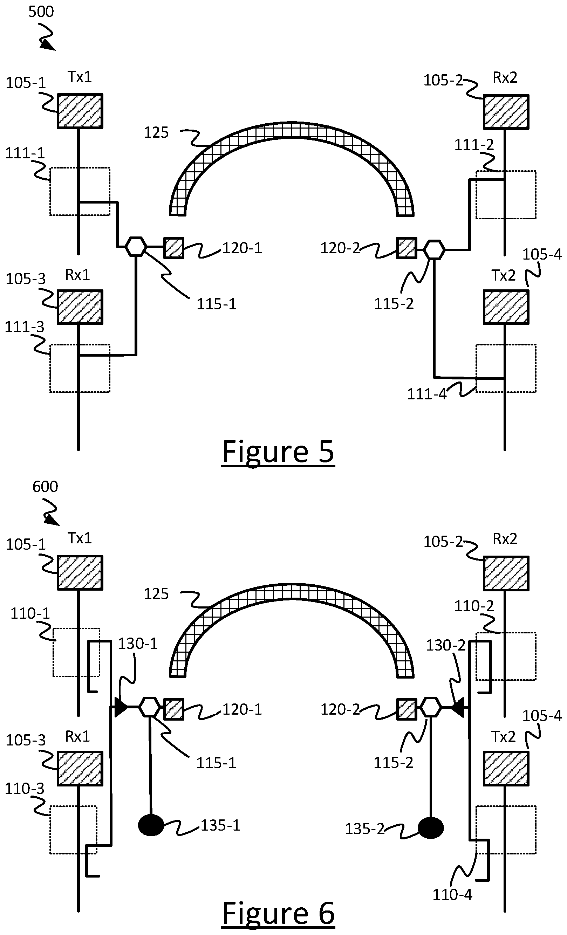

Figure 5 illustrates a diagram of a radar system 500 according to a fifth embodiment of the present disclosure. The radar system 500 comprises a first and second radar unit coupled by a waveguide 125.

The radar system 500 comprises similar elements as those of Figure 4. If very high isolation is not needed, then the coupling structures of Figure 4 can be replaced with power dividers 111-1, 111-2 which direct a portion of the signal from the radar heads to the phase shifters 115.

Power dividers 111-1, 111-2 are passive devices used mostly in the field of radio technology. They couple a defined amount of the electromagnetic power in a transmission line to a port enabling the signal to be used in another circuit. Power dividers 111-1, 111-2 directly divide power straight from the radar Tx or Rx head. A power division ratio suitable for the application can be achieved.

Any of the embodiments described in the present disclosure can use power dividers or directional couplers. However, the isolation of the transmitter head signals achievable with use of the phase shifters 115 makes this embodiment particularly suited to use with power dividers.

Figure 6 illustrates a diagram of a radar system 600 according to a sixth embodiment of the present disclosure comprising a Tx-Rx channel and data channel. The radar system 600 comprises a first and second radar unit coupled by a waveguide 125.

The first radar unit comprises a transmitter head Tx1 coupled via a first coupling structure 110-1 and a receiver head Rx1 105-3 coupled via a third coupling structure 110-3 to a first power combiner 130-1. A first phase shifter 115-1 receives input from the first power combiner 130-1 and a first data transceiver 135-1. The first phase shifter 115-1 is coupled to a first waveguide launcher 120-1 comprising a first circular polarized waveguide launcher having dual ports for receiving a dual feed from the first phase shifter 115-1.

The second radar unit comprises a receiver head Rx2 105-2 and a second coupling structure 110-2, a transmitter head Tx2 105-4 and a fourth coupling structure 110-4, wherein the coupling structures 110-2, 110-4 are coupled to a second power combiner 130-2. A second phase shifter 115-2 receives input from the second power combiner 130-2 and a second data transceiver 135-2. The second phase shifter 115-2 is coupled to a second polarized waveguide launcher 120-2 comprising a second circular polarized waveguide launcher having dual ports for receiving a dual feed from the second phase shifter 115-2.

The first and second radar units are coupled to one another via a waveguide 125 suitable for wavelengths in the millimetre range as used in the present disclosure and as described above in detail.

The radar system 600 comprises first and second data transceivers 135-1, 135-2 which are coupled to first and second phase shifters 115-1, 115-2 respectively. The first and second phase shifters comprise dual input dual output phase shifters 115-1, 115-2 which feed dual input waveguide launchers 120-1, 120-2. The dual input to the first phase shifter 115-1 comprises a first input signal from the combined Tx1, Rx1 signal via the first power combiner 130-1 and a second input signal from the first data transceiver 135-1. The outputs from the first phase shifter 115-1 are shifted to cause a right handed polarized and a left handed polarized signal being launched into the waveguide 125. The dual input to the second phase shifter 115-2 comprises a first input signal from the combined Tx2, Rx2 signal via the second power combiner 130-2 and a second input signal from the second data transceiver 135-2. The outputs from the second phase shifter result in a right handed polarized and a left handed polarized signal being excited at the waveguide launcher 120. The circular polarizing waveguide launchers 120-1, 120-2 receive the output phase shifted signals from the phase shifters 115-1, 115-2.

The dual input dual output phase shifters 115-1, 115-2 can be used to introduce different phase shifts to the Tx and Rx channels in order to excite right handed circular polarization for one channel and left handed circular polarization for the other channel. An advantage of this is to provide extra isolation.

As illustrated in Figure 6, the first phase shifter 115-1 is dual fed: one signal is received from the Tx1-Rx1 combined signal (combined by power combiner 130-1) and one signal from the data transceiver 135-1. The second phase shifter 115-2 is similarly dual fed by the Rx2-Tx2 combined signal and the second data transceiver 135-2. The additional information provided by the first and second data transceivers 135-1, 135-2 which are coupled to the first and second waveguide launchers 120-1, 120-2 respectively via phase shifters 115-1, 115-2 comprises communication data for distributed radar functionality in addition to the synchronization chirp from the Tx-Rx signal received via the power combiners 130-1, 130-2.

By dual feeding the waveguide launchers 120 with information from the transmitter heads 105 and information from the data transceivers 135, a Tx-Rx chirp signal and a data transmission signal can be transmitted via the waveguide 125 in different channels. One of the two available polarizations (left or right handed) can be used for sending the synchronization signal (chirp signal) while the other available polarization can be used to establish a communication link between the two units. These signals can all be sent using the same waveguide 125 prepared for transmission with the same waveguide launchers 120 as in the other embodiments, offering a compact solution. The advantage of dual polarized signals is that different information can be sent to the other radar unit via the right and left handed polarizations of the signals transmitted by the waveguide 125 to the other radar unit.

In an alternative embodiment to any of the embodiments described herein, direct synchronization of local oscillators LO of the radar units in the transmitter and receiver heads 105 can be performed without coupling from antenna feeding line via the coupling structures 110-1, 110-2. This is possible by using a similar fully integrated waveguide network that directly transfers the signal from an LO_out of one radar unit of the system to the LO_in of the other radar unit. However, for such arrangement, the waveguide launcher and waveguide need to be designed to operate at lower frequency.

Figure 7 illustrates a zoomed in view of a coupler 700 used in some of the embodiments described above. Directional couplers 110 are passive devices used mostly in the field of radio technology. Three numbered ports are illustrated in Figure 7. Ports 1 and 2, and 1 and 3 are power-coupled, whilst ports 2 and 3 are not power-coupled.

The coupling of the energy can be achieved by adding a coupling structure 110 to the feeding network of the transmitter or receiver (e.g. a directional coupler or power divider). Such a coupling structure will then feed a waveguide launcher 120 that excites the waveguide 125. The signal needed for synchronization propagates through that waveguide 125 to the other radar unit where it excites the other, receiving waveguide launcher 120. Such receiving waveguide launcher transforms the impinging electromagnetic waves into a signal that is coupled then to the receiving channel of the other radar unit by a coupling structure 110.

Figure 7 illustrates an example of a coupling structure 110 comprising a coupler to couple the energy from the transmitter or receiver antenna feedline to the waveguide launcher 120. A distance x between the feedline and the length of the coupler is optimized to leak a small portion of the transmitter/receiver energy to the waveguide launcher 120 in order not to significantly affect the radar performance. In some examples, the distance x may be less than 1 mm, though other distances can be used to tune the system appropriately. Power re-directed by the coupler is transmitted to the waveguide launchers 120. In testing, transmitter energy dropped by -0.93dB (including losses in the lines) when the coupler was designed to couple -20 dB of energy for synchronization.

Figure 8 illustrates an example of a power combiner 130. The power combiner 130 can be used in the third and sixth embodiments to combine power from the Tx and Rx of a radar unit. Testing has shown that coupled power from the Tx coupler 110-1, 110-4 to the waveguide 125 and from the waveguide 125 to the Rx coupler 110-3, 110-2 fits well in synchronisation link budget calculations.

Figures 9A and 9B illustrate alternative waveguide launcher configurations. Figure 9A illustrates an example waveguide launcher 120 that excites a circular polarized wave according to embodiments described herein.

Circular polarization is achieved by forming a waveguide launcher 120 having a square profile and trimming opposite edges of the waveguide launcher 120.

The waveguide launcher in Figure 9A comprises a single port for receiving a signal. This configuration of the waveguide launcher 120 is compatible with embodiments illustrated in Figures 1 to 3 of the present disclosure.

Figure 9B illustrates an alternative waveguide launcher 120 that excites a circular polarized wave according to embodiments described herein.

The waveguide launcher 120 of Figure 9B comprises a square profile and has two orthogonal ports for receiving dual input feed, for example from the phase shifter 130 in the fourth, fifth and sixth embodiments described above in relation to Figures 4 to 6.

Circular polarization can be achieved by delaying the feeding signal in the horizontal input port signal (x direction) by 90 compared to the vertical input port signal (y direction) as received as signals output from the phase shifter 115.

Figure 10 illustrates a phase shifter 115 according to embodiments of the present disclosure. The phase shifter comprises dual input ports 1, 4 and dual output ports 3, 2.

A dual input dual output phase shifter as illustrated in Figure 10 can be used to introduce different phase shifts to the Tx and Rx channels in order for the waveguide launchers 120 to excite right handed circular polarization for one channel and left handed circular polarization for the other to provide extra isolation of the signals. The phase shifter 115 is a 90° degrees (λ/4) hybrid, where Tx and Rx can be connected to ports 1 and 4 and the other two ports 2 and 3 feed the dual feed circular waveguide launcher to generate clockwise and anticlockwise rotated fields in the waveguide 125.

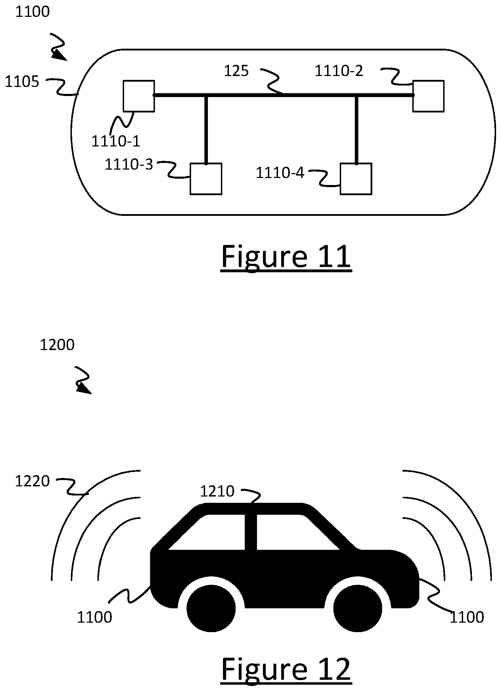

Figure 11 illustrates a schematic diagram of a vehicle bumper 1105 comprising radar units 1110-1, 1110-2, 1110-3, 1110-4 which are distributed about the bumper 1105 and connected to one another via a dielectric waveguide 125.

The radar units 1110-1, 1110-2, 1110-3, 1110-4 each comprise a transceiver head and a receiver head.

The number of radar units 1110 can be scaled up, to include more radar units 810. All are connectable via a singular dielectric waveguide 125, which can be manufactured according to requirements.

Synchronization of multiple radar units coupled by the waveguide 125 can be achieved because waveguide dividers can be fabricated as one item with the waveguides, for example as illustrated in Figure 11. Prior art technologies require addition of components to introduce more radar units to the system, requiring more expensive, less efficient and heavier systems. The present disclosure therefore provides advantages over prior art systems because it is easily scalable.

Figure 12 illustrates a vehicle 1210 comprising a radar system. The vehicle comprises bumpers 1100 having the radar system as illustrated in Figure 11.

Radar signals 1220 are emitted from the radar system comprised in the vehicle bumpers 1100. These signals can be used in parking systems, for example, to prevent a driver from hitting into objects that the radar signal 1220 detects close to the vehicle 1210.

Whilst the above examples have been described for the use in automotive applications, the radar structure described herein can be used in any suitable radar system.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

## Claims

1. A radar system for a vehicle, the radar system comprising:
a first radar unit comprising:
a first transmitter head and a first receiver head;
a first coupling structure coupled to the first transmitter head or the first receiver head; and
a first circular polarizing waveguide launcher coupled to the first coupling structure;
a second radar unit comprising:
a second transmitter head and a second receiver head;
a second coupling structure coupled to the second receiver head; and
a second circular polarizing waveguide launcher coupled to the second coupling structure; and
a waveguide coupled between the first and second waveguide launchers;
wherein the first and second coupling structures are configured to redirect a portion of a signal from the respective transmitter head or receiver head that the coupling structure is coupled to in order to excite the first and second circular polarizing waveguide launchers respectively in order to transmit an excited circularly polarized signal to the other of the radar units via the waveguide;
wherein upon receipt of the excited circularly polarized signal received via the waveguide, a beat signal is generated from which a frequency offset and a phase-noise calculation are made; and
wherein the first and second radar units are configured to be synchronized based on the frequency offset and the phase-noise calculation.

2. The radar system of claim 1, the first radar unit further comprising a third coupling structure coupled to the other of the first receiver head or the first transmitter head of the first radar unit; and
the second radar unit further comprising a fourth coupling structure coupled to the transmitter head of the second radar unit.

3. The radar system of claim 3, the first radar unit further comprising a first power combiner configured to combine signals from the first and third coupling structures; and
the second radar unit further comprising a second power combiner configured to combine signals from the second and fourth coupling structures.

4. The radar system of any preceding claim, wherein the circular polarizing waveguide launchers comprise a single port.

5. The radar system of claim 2, further comprising:
a first phase shifter coupled to the first and third coupling structures and the first circular polarizing waveguide launcher; and
a second phase shifter coupled to the second and fourth coupling structures and the second circular polarizing waveguide launcher.

6. The radar system of claim 5, wherein the first and second phase shifters each comprise a dual input dual output phase shifter.

7. The radar system according to claim 6, wherein dual output signals have a 90 degree phase shift relative to one another.

8. The radar system according to any of claims 5 to 7, wherein the first and second circular polarizing waveguide launchers each excite a clockwise and an anti-clockwise rotated field in the waveguide.

9. The radar system according to any of claims 5 to 8, the first radar unit further comprising:
a first power combiner configured to combine signals from the first and third coupling structures;
a first data transceiver; and
the first phase shifter coupled to the first power combiner and the first data transceiver;
the second radar unit further comprising:
a second power combiner configured to combine signals from the second and fourth coupling structures;
a second data transceiver; and
the second phase shifter coupled to the second power combiner and the second data transceiver.

10. The radar system according to any preceding claim, wherein the coupling structures each comprise a directional coupler.

11. The radar system according to any of claims 1 to 9, wherein the coupling structures each comprise a power divider.

12. The radar system of any preceding claim, wherein the waveguide is configured to connect to one or more further radar units.

13. The radar system of any preceding claim, wherein the redirected portion of power of the respective radar head comprises less than 10% of the total power of the radar head.

14. A bumper comprising the radar system of any preceding claim.

15. A vehicle comprising the radar system of any of claims 1 to 13 or the bumper of claim 14.
